Europäisches Patentamt

**European Patent Office**

**Office européen des brevets**

(19)

(11) Publication number: **0 114 336**
A2

(12)

# EUROPEAN PATENT APPLICATION

(21) Application number: **83112778.2**

(22) Date of filing: **19.12.83**

(51) Int. Cl.³: **C 25 B 9/00**

---

(30) Priority: **23.12.82 IT 2493182**

(43) Date of publication of application:
**01.08.84 Bulletin 84/31**

(84) Designated Contracting States:
**AT BE CH DE FR GB IT LI LU NL SE**

(71) Applicant: **INDUSTRIE ZANUSSI S.p.A.**
Via Giardini Cattaneo 3
I-33170 Pordenone(IT)

(72) Inventor: **Bianchi, Giuseppe**
Piazza Libia 1
I-20135 Milano(IT)

(74) Representative: **Patentanwälte Grünecker, Dr.
Kinkeldey, Dr. Stockmair, Dr. Schumann, Jakob, Dr.
Bezold, Meister, Hilgers, Dr. Meyer-Plath**
Maximilianstrasse 58
D-8000 München 22(DE)

---

(54) **Electrolyte cell for the automatic and intermittent production of chlorine water.**

(57) For the electrolytic production of gaseous chlorine to be absorbed in water for obtaining chlorine water for use in small or modest quantities, the invention provides an electrolytic cell without a partition wall between the anode compartment and the cathode compartment which are otherwise physically separate from and in communication with one another adjacent their lower ends.

EP 0 114 336 A2

Electrolytic Cell for the Production of
Chlorine Water by Automatizable Inter-
mittent Operation

TITLE MODIFIED
see front page

Description

The present invention relates to an intermittently operable
and completely automatizable electrolytic cell for the
production of small or moderate quantities (on the order
of a few grammes, or kilogrammes, respectively, per hour)
of chlorine water without envoling any safety problems.

An electrolytic cell of this type may be used by itself or
installed into apparatus such as laundry washing machines,
dishwashing machines and the like.

It may also be employed in a battery-type arrangement of
a plurality of cells, each of which may be connected to a
separate absorption apparatus for producing chlorine water.

In view of the fact that it is the main objective of the
electrolysis to produce gaseous chlorine, it is of importance to prevent the electrolysis products of the anode
and cathode compartments from from partially or totally
intermingling with each other, as this would lead to the
production of sodium hypochloride.

In known electrolytic cells this is achieved by the provision of a partition wall separating the anode compartment
from the cathode compartment and thus preventing the two
solutions formed therein from mixing with one another. This
technique has been known for a long time and was developed
for the production of large quantities of gaseous chlorine.

The presence of the partition wall, however, may lead to
various problems and inconveniences which may be summed up
as follows:

- the material employed for the partition wall may deteriorate due to the acidic/basic nature of the solutions coming into contact therewith,
- The material may also deteriorate due to the temperature rise caused by the electrolytic process.
- The employ of a saturated sodium chloride solution may lead to obturation of the pores of the partition walls by deposits of calcium and other impurities contained in the brine.
- Obturation of the pores may also be caused by carbon particles released by the electrodes of the cell.

A main object of the invention is therefore the provision of an electrolytic cell for the production of gaseous chlorine and chlorine water without incurring the above outlined inconveniences and problems.

A more specific object of the invention is the provision of an electrolytic cell for the production of gaseous chlorine and chlorine water without the employ of a partition wall.

These and other objects are attained according to the invention by the provision of an electrolytic cell of the type comprising two compartments, an anode compartment and cathode compartment, respectively, in which the respective electrodes are disposed, such electrolytic cell being characterized in that the said compartments are physically distinct from one another and in communication with one another at the bottom portions thereof, said electrodes being preferably disposed substantially horizontal, the upper ends of said compartments communicating with a mixing collector adapted to supply the gasses generated by the electrolysis to a water-filled absorption column.

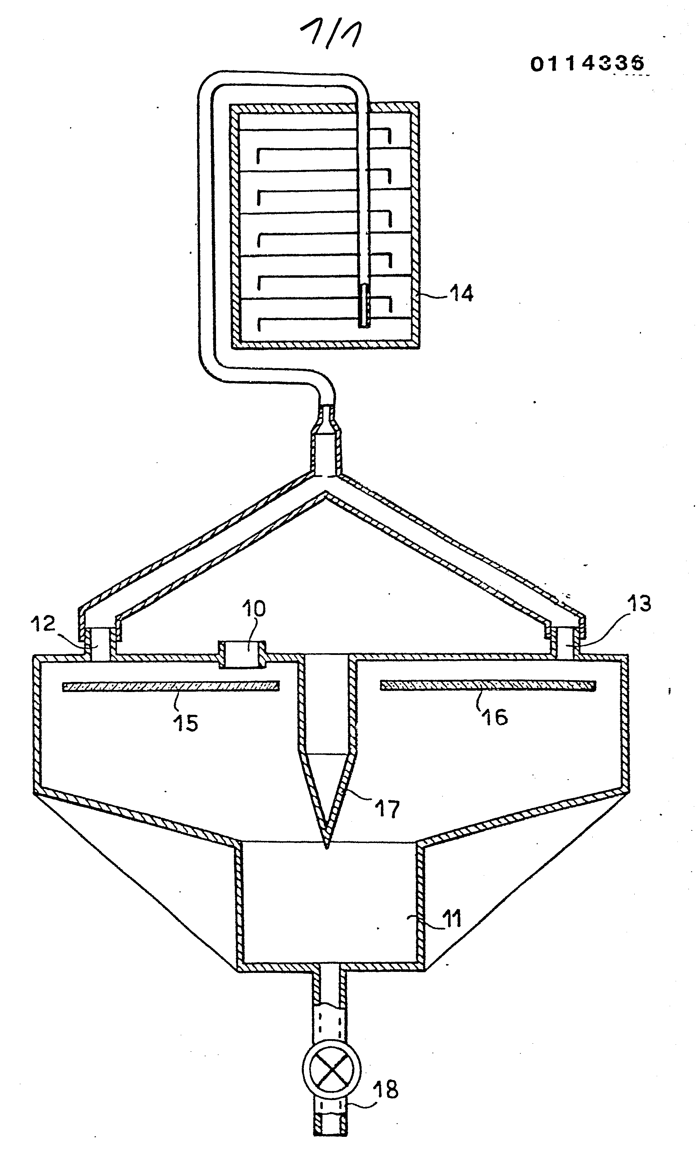

In the accompanying drawing, the only figure shows a diagrammatic cross-sectional view of an electrolytic cell for the production of gaseous chlorine, connected to apparatus for the absorption of the chlorine in water for the production of chlorine water, said cell being suitably designed for eliminating the porous partition wall between its anode and cathode compartments.

As shown in the drawing, the electrolityc cell is of a suitable design resulting in the two compartments being sufficiently separate from one another while being in communication with one another via a passage permitting the flow therethrough of the electrolysis current.

The cell is formed with an inlet 10 permitting it to be filled with a highly concentrated aquaeous sodium chloride solution (about 300 g/l), a bottom conduit 18 permitting both compartments to be emptied simultaneously, and a pair of outlets 12 and 13 for the escape of gaseous chlorine and hydrogen, which are subsequently mixed with one another and supplied to the bottom portion of a water-filled absorption column 14 via a dip tube. Disposed in the two compartments are electrodex 15 and 16, respectively, formed of graphite or another suitable material and suitably treated for improving their resistance to the electrolytic solutions, said electrodes functioning as anode and cathode, respectively.

The electrodes may be in the form of horizontally disposed graphite plates optionally provided with perforations for the passage of chlorine and hydrogen bubbles formed on the lower surfaces of the electrodes during the electrolysis. As an alternative, the electrodes may be formed of graphite rods or pins connected to one another in a parallel arrangement. Any other suitable form of electrodes is also possible. The electrodes are in any case preferably disposed in a substantially horizontal position so as to increase the distance between them.

If the electrodes are formed as plates, they are preferably disposed at a slightly inclined position so as to facilitate the escape of chlorine and hydrogen bubbles forming at their lower surfaces, and at the same time to ensure that the zones, whereat the electrodes are attached to the walls of the electrolytic cell, do not come into contact with the electrolytic solution in order to avoid the escape or leakage of the solution.

The bottom conduit 18 is provided with a control valve and connected to a well 11 provided for collecting and conveying towards the outlet the denser fractions of the electrolytic solution formed in the cathode compartment under the action of gravity, thus preventing these fractions from entering the anode compartment.

A baffle plate 17 depending from the top wall of the cell prevents the lighter fraction of the solution formed in the anode compartment from entering the cathode compartment.

The described cell thus presents remarkable advantages with regard to reliability and simplicity of construction, as it lacks the above mentioned partition wall which might otherwise lead to the inconveniences outlined above.

In comparison to a cell incloding a partition wall, the described cell presents a higher electric resistance due to the greater distance between the electrodes.

In the course of experiments it has been found that the required tension is about twice that required for a cell having a partition wall, and thus a smaller distance between its electrodes, for the production of a few grammes of gaseous chlorine per hour. This requisite increase of the tension is not a significant disadvantage as regards the consumption of energy, as the energy consumption for the production of such small amounts of gaseous chlorine is rather modest in any case. Certain problems may be brought about, however, by the noticable rise of the temperature of the electrolytic solution during electrolysis caused by the increased energy dissipation due to the Ohmic effect.

Due to the fact that the ionic mobility, and thus the electrolytic current increase with the temperature, the solution may be heated at an increasing rate to a temperature closely approaching the boiling point.

The main consequence of such excessive heating of the cell would be a diminution of the yield of the electrolysis due to the occurrence of combination reactions between the products of the electrolysis.

There may in fact occur the formation of discrete quantities of hypochloride, chlorides etc.. In addition, overheating may result in a reduced durability of the electrodes of the cell.

The increase of the temperature may be limited, and thus the proper operation of the electrolytic cell ensured, by proceding in any of the various manners outlined below:

1) by suitably increasing the dimensions of the cell for a constant supply thereto at the correct tension (e.g. 12 V), so that the heating energy can be absorbed by the cell without excessive rise of temperature,

2) by operating the cell at a constant current rate with the aid of an electronic control system with retroaction on the primary current,

3) by operating the cell at a constant current rate under positive temperature control (PTC)of the cell, making use of the fact that the electric reistance of the PTC increases rapidly as the temperature of the cell rises,

4) by operating the cell at a higher initial tension value during the first phase with the cell still cold, and changing to a lower tension during the second phase

with the cell at a higher temperature, for thus reducing the current.

In operation at a constant tension of 12 Volts, the efficiency of the electrolytic cell shown in the drawing amounts to about 80% under the conditions set forth above, and is thus quite satisfactory.

From the above description it is evident that the present invention offers an industrially advantageous solution to the technical problem encountered, and is particularly suitable for use in smaller and modest applications requiring only a few grammes or kilogrammes of chlorine water per hour at irregular intervals, such as for instance in washing machines, drinking water treatment plants and the like.

In this context it is important to emphasize the fact that the design of the cell is of a type offering the greatest possible obstacle to the circulation of the anodic solution from one compartment to the other and above all reliably preventing the caustic soda produced in one of the compartments from coming into contact and thus reacting with the gaseous chlorine developed in the other compartment.

A considerable contribution to this effect is due to the dynamic equilibrium of the pressures acting in the two compartments and opposing the otherwise considerable tendency of the two solutions to mix with one another.

GRÜNECKER, KINKELDEY, STOCKMAIR & PARTNER

PATENTANWÄLTE
EUROPEAN PATENT ATTORNEYS

A GRUNECKER, DIPL-ING
DR H KINKELDEY, DIPL-ING
DR W STOCKMAIR, DIPL-ING, AE E KALTECH
DR K SCHUMANN, DIPL-PHYS
P. H JAKOB, DIPL-ING
DR G BEZOLD, DIPL-CHEM
W MEISTER, DIPL-ING
H. HILGERS, DIPL-ING
DR H MEYER-PLATH, DIPL-ING

8000 MÜNCHEN 22
MAXIMILIANSTRASSE 58

EP 12 65

TITLE MODIFIED
see front page

Electrolytic Cell for the Production of
Chlorine Water by Automatizable Inter-
mittent Operation

Patent Claims

1.     Electrolytic cell for the production of gaseous chlorine and chlorine water by the absorption of said gaseous chlorine in water, particularly for washing machines, of the type comprising two electrode compartments, an anode compartment and a cathode compartment, respectively, with the respective electrodes being disposed in said compartments, characterized in that said compartments are physically distinct from one another and in communication with one another adjacent their bottom portion (11) provided with an outlet opening (18).

2. An electrolytic cell according to claim 1, characterized in that said compartments adjacent their upper portions are in communication with a mixign collector (12, 13) destined to feed the electrolysis products to a water-filled absorption column (14).

3. an Electrolytic cell according to claim 1 or 2, characterized in that said electrodes (15, 16) are mounted in substantially horizontal positions in the electrode compartments.

4. An electrolytic cell according to any of claims 1 to 3, characterized in that adjacent said bottom outlet opening (18) there is provided a well (11) for collecting the denser cathodic solution.

5. An electrolytic cell according to any of claims 1 to 4, characterized in that the compartments are separated from one another by a non-porous baffle (17) extending downwards in the direction of said bottom outlet opening (18) so as to cause the separation by gravity of the higher-density solution from the cathode compartment instead of its entering the anode compartment, and to prevent the lower-density solution of the anode compartment from entering the cathode compartment.

0114336